# EUROPÄISCHE PATENTSCHRIFT

(11) **EP 3 115 757 B1**
(45) Veröffentlichungstag und Bekanntmachung des Hinweises auf die Patenterteilung: **04.09.2019**
(21) Anmeldenummer: 16176041.8
(22) Anmeldetag: 23.06.2016
(51) Int. Cl.: G01K 1/08, G01N 27/07, G01F 23/24, G01F 23/26

(54) **MESSSONDE ZUM ERFASSEN MINDESTENS EINER MESSGRÖSSE EINES FLUIDS**
MEASUREMENT PROBE FOR DETECTING AT LEAST ONE MEASURED VALUE OF A FLUID
SONDE DE MESURE DESTINEE A DETECTER AU MOINS UNE GRANDEUR DE MESURE D'UN FLUIDE

(30) Priorität: 07.07.2015 DE 102015212655
(43) Veröffentlichungstag der Anmeldung: 11.01.2017
(73) Patentinhaber: Gestra AG, 28215 Bremen (DE)
(72) Erfinder: Klattenhoff, Jürgen, 27749 Delmenhorst (DE); Schröter, Holger, 28832 Achim (DE)
(74) Vertreter: Eisenführ Speiser

(56) Entgegenhaltungen:
- EP-A1- 2 442 077
- DE-A1-102013 110 044
- US-A1- 2007 125 663
- US-A1- 2009 268 779
- US-B1- 6 563 328

## Beschreibung

Die Erfindung bezieht sich auf eine Messsonde zum Erfassen mindestens einer Messgröße eines Fluids in einer Apparatur, insbesondere einem Behälter, gemäß dem Oberbegriff von Anspruch 1.

Es sind Messsonden im Stand der Technik bekannt, mit denen physikalische oder chemische Eigenschaften eines Stoffes, wie beispielsweise eines Fluids, oder eine apparatespezifische Messgröße, detektiert, also erfasst werden. Physikalische oder chemische Eigenschaften beziehungsweise Messgrößen sind zum Beispiel die Temperatur, der Druck, die Leitfähigkeit des Stoffes und apparatespezifische Eigenschaften beziehungsweise Messgrößen sind unter anderem der Füllstand oder die Fließgeschwindigkeit des Fluids innerhalb der Apparatur. Die Messgrößen des Fluids in der Apparatur, wie beispielsweise ein Druckbehälter, eine Rohrleitung oder ein Dampferzeuger, werden erfasst beziehungsweise aufgenommen, um innerhalb der Apparatur ablaufende Prozesse überwachen und/oder gezielt beeinflussen zu können.

Eine Messsonde der vorbezeichneten Gattung ist beispielsweise aus DE 195 40 035 A1 bekannt, mittels der der Füllstand eines Mediums in einem Behälter erfasst und entsprechend überwacht werden soll. Die Messsonde weist einen in einen Behälter hineinragenden Füllstands-Sensor mit wenigstens einem Leiter als Messkörper auf, der relativ hohen Betriebstemperaturen von zum Beispiel 300 Grad ausgesetzt ist. Um eine thermische Entkopplung der mit dem Sensor elektrisch verbundenen Schaltungsteile zu bewirken, ist ein Halsteil an der Sonde vorgesehen, mit dem der Abstand zwischen dem Sensor und den Schaltungs-Bauteilen vergrößert ist. Jedoch haben die hohen Temperaturen und gegebenenfalls gleichzeitig wirkenden hohen Drücke innerhalb der Apparatur auch Einfluss auf die Zuverlässigkeit eines in die als Behälter ausgebildete Apparatur hineinragenden Messkörpers selbst. Zudem sind an einer Apparatur eine Vielzahl solcher Messsonden angeordnet, um die verschiedenen Eigenschaften des Fluids erfassen zu können. Ein weiterer Füllstands-Sensor ist in US 6,563,328 B1 beschrieben. Dieser kapazitive Füllstands-Sensor weist ein Rohr aus dielektrischem Material auf, welches mit einem Metallschmelz gefüllt wird. Das Metall bildet nach Erstarrung eine Sensorelektrode.

US 2009/268779 A1 betrifft ein Temperatursensorelement, das einen länglichen Sinterkörper aus einer isolierenden Keramik aufweist. Innerhalb des Sinterkörpers ist ein Thermoelement aus parallel zueinander verlaufenden Leiterabschnitten aus Wolfram oder einer Wolfram-Legierung eingebettet.

Der Erfindung liegt daher die Aufgabe zugrunde, eine Messsonde der vorbezeichneten Gattung bereitzustellen, die zumindest eine verbesserte Zuverlässigkeit aufweist und/oder gut abdichtbar ist.

Die Erfindung löst die ihr zugrunde liegende Aufgabe bei einer Messsonde zum Erfassen mindestens einer Messgröße eines Fluids dadurch, dass der Leiter einen wenigstens über nahezu die gesamte Länge des Grundkörpers eingesinterten Leiterabschnitt hat, wobei der Leiter (36, 38, 40, 42) aus einem Verbundwerkstoff gebildet ist oder einen Verbundwerkstoff enthält, auf Basis eines keramischen Werkstoffs.

Der Erfindung liegt die Erkenntnis zugrunde, dass mit einem eingesinterten Leiter in einen vorzugsweise isolierenden Grundkörper aus einem Keramik-Werkstoff eine hohe Druckdichtheit des Messkörpers der Messsonde erreicht ist. Das Eintreten von Fluid in das Innere des Messkörpers entlang des Messkörpers ist auch bei hohen Temperaturen und Drücken von bis zu 200 bar auf vorteilhafte Weise erschwert. Mit dem Einsintern des Leiters in den Keramik-Werkstoff wird vorzugsweise über eine lange Strecke innerhalb des Messkörpers eine abdichtende Verbindung zwischen der Oberfläche des Leiters und dem bevorzugt die äußere Kontur des Messkörpers erzeugenden Grundkörper gewährleistet. Damit ist das Entstehen von Undichtheiten am Messkörper und eine mögliche Einflussnahme auf die zu erfassenden Messgrößen und einen durch die Messgrößen gesteuerten Prozess verringert. Vorzugsweise ist ein elektrischer Leiter, aus zum Beispiel Platin, innerhalb des aus einem Keramik-Werkstoff ausgebildeten Grundkörpers des Messkörpers eingesintert. Vorzugsweise hat der Grundkörper aus dem Keramik-Werkstoff, der dem Messkörper eine hohe Festigkeit verleiht, zumindest entlang eines Abschnitts des aufgenommenen Leiters die Funktion einer isolierenden Ummantelung.

Gemäß der Erfindung ist der Leiter aus einem Verbundwerkstoff gebildet oder enthält einen Verbundwerkstoff, vorzugsweise auf Basis eines keramischen Werkstoffs. In einer Ausführungsform ist der keramische Werkstoff bevorzugt in eine metallische Matrix eingebettet. Ein solcher Verbundwerkstoff, welcher auch als "Cermet" bezeichnet wird, hat die Eigenschaft, dass insbesondere dessen Leitfähigkeit durch Zugabe entsprechender Komponenten, wie beispielsweise Niob, Titan, Kobalt oder dergleichen, einstellbar ist. Die Zusammensetzung des Verbundwerkstoffes, aus dem der Leiter ausgebildet ist, wird bevorzugt in Abhängigkeit von den mit den Leitern zu erreichenden Eigenschaften gewählt. In einer alternativen Ausgestaltung wird als Verbundwerkstoff zur Ausbildung des Leiters ein auf gesintertem Siliziumkarbid basierendes Keramikmaterial eingesetzt. Dem Siliziumkarbid werden vorbestimmte Additive hinzugegeben, um den Verbundwerkstoff als Leiter oder Isolator einsetzen zu können. Als Additive werden beispielsweise Aluminium, Bor, Stickstoff oder Phosphor verwendet.

Vorzugsweise sind innerhalb des Messkörpers mehrere Leiter vorgesehen, welche zumindest abschnittsweise in dem aus einem Keramik-Werkstoff bestehenden Grundkörper aufgenommen beziehungsweise isolierend umschlossen sind. Mithilfe der Vielzahl an Leitern können auf einfache Weise mehrere gleiche oder unterschiedliche Messgrößen mittels des Messkörpers erfasst werden. Damit wird der Einsatz von mehreren Messkörpern und einer entsprechenden Anzahl an Messsonden an der Apparatur, welche im Stand der Technik nur zur Erfassung einer Messgröße eingerichtet sind, auf vorteilhafte Weise überflüssig. Damit ist die Komplexität des nunmehr mehrere gleiche oder verschiedene Messsensoren vereinenden, erfindungsgemäßen Messkörpers erhöht. Jedoch ist der gerätetechnische Aufwand, da jeder einzelne Messkörper sonst mit seiner eigenen elektronischen Schaltungseinheit zu verbinden ist, erheblich verringert. Zudem entfallen mehrere der kostenintensiv herzustellenden Einbaustellen für die sonst mehreren verschiedenen Messsonden an der Apparatur, insbesondere in der Wandung eines Behälters. Die bevorzugt mehreren Leiter sind durch den bevorzugt als Isolator ausgebildeten Keramik-Werkstoff, welcher zur Ausbildung des Grundkörpers eingesetzt wird, im Wesentlichen vollständig umschlossen. Damit weisen die Leiter vorzugsweise untereinander keine Verbindung auf.

Nach einer bevorzugten Weiterbildung der erfindungsgemäßen Messsonde ist mindestens ein Leiter zum Erfassen eines Maximal-Füllstands des Fluids und/oder ein Leiter zum Erfassen eines Minimal-Füllstands des Fluids und/oder ein Leiter zum kontinuierlichen Erfassen des Füllstands des Fluids in der Apparatur vorgesehen. Vorzugsweise weist der Messkörper sämtliche der vorbeschriebenen Leiter zum Erfassen der verschiedenen Füllstands-Niveaus des Fluids in der Apparatur auf. Damit lassen sich mehrere zu überwachende Zustandsgrößen des Fluids gleichzeitig oder sukzessive mittels des einen Messkörpers und seinen mehreren Leitern innerhalb der Apparatur erfassen. Mithilfe der Leiter zum Erfassen eines Maximal- oder Minimal-Füllstands werden bevorzugt Signale an die elektronische Steuereinheit übertragen, die als Alarmsignale an eine zentrale Überwachung übermittelt werden. Das Ermitteln der minimalen oder maximalen Grenz-Füllständen des Fluids innerhalb des Behälters basiert bevorzugt auf dem konduktiven Messprinzip. Die Übermittlung der bevorzugt kontinuierlich erfassten Messgrößen sowie möglicher Alarmsignale erfolgt bevorzugt mittels wenigstens einer der Steuereinheit der Messsonde zugeordneten Sende- und Empfangseinheit. Bevorzugt erfolgt die kontinuierliche Füllstandsmessung im Behälter kapazitiv durch Erfassung der Änderung der elektrischen Kapazität zwischen zwei Mess-Elektroden. Die Mess-Elektroden werden in einer Ausführungsform durch einen U-förmigen Leiter und die Kesselmasse oder in einer anderen Ausführungsform durch einen einzelnen Leiter und die Apparaturmasse gebildet.

Vorzugsweise ist der Leiter im Wesentlichen U-förmig innerhalb des Grundkörpers ausgebildet, wobei vorzugsweise die Leiterenden an einer Stirnseite (52') des Messkörpers (20') enden. Der Leiter hat vorzugsweise zwei Leiterabschnitte, die sich bevorzugt parallel über nahezu die Gesamtlänge des Grundkörpers erstrecken. Der im Grundkörper im Wesentlichen U-förmig verlaufende Leiter dient vorzugsweise der kontinuierlichen Niveauerfassung, nach dem kapazitiven Messprinzip. Die Enden des ähnlich einer Schlinge im Grundkörper eingesinterten Leiters weisen vorzugsweise auf der drucklosen Seite des Grundkörpers Kontaktflächen für eine elektrisch leitende Verbindung mit jeweils einem Anschlussdraht auf. Auf diese Weise ist es möglich eine Leitungsbruch-Überwachung durchzuführen und bei entsprechender Auslegung des elektrischen Widerstandes des U-förmigen Leiters, vorzugsweise neben einer kontinuierlichen Füllstandsmessung diesen zusätzlich als Widerstandsthermometer zu verwenden. Dadurch können über einen Leiter bevorzugt zwei Messgrößen gleichzeitig erfasst werden, wobei eine wechselseitige Überprüfbarkeit der durch den einen Leiter aufgenommenen Messgrößen gewährleistet ist.

Bevorzugt ist wenigstens einer der Leiter im Messkörper zum Erfassen der Leitfähigkeit des Fluids innerhalb der Apparatur eingerichtet. Damit ist erreicht, dass eine Änderung der Leitfähigkeit, die zum Beispiel direkten Einfluss auf weitere gemessene Größen des Fluids in der Apparatur hat, unmittelbar bei der Bestimmung dieser Messgrößen, wie dem Füllstand oder dergleichen, im Behälter berücksichtigt werden kann. An einem Leiter der eine U-Form aufweist bzw. als Schlinge im Grundkörper verläuft, wird vorzugsweise eine Doppelfunktion, nämlich die kapazitive Füllstandsmessung und die Temperaturmessung, umgesetzt. Die beiden an einem Ende aus dem Grundkörper ragenden Leiterenden des U-förmigen Leiters sind jeweils bevorzugt einzeln zu- bzw. abschaltbar.

Nach einer anderen Weiterbildung der Erfindung verläuft mindestens ein Leiter wenigstens abschnittsweise parallel zur Mittelachse des Messkörpers. Bevorzugt verläuft der Leiter über einen Großteil seiner Gesamtlänge parallel zur Mittelachse des Messkörpers und somit zu dem die äußere Struktur des Messkörpers ausbildenden Grundkörper. Dadurch ist eine sichere Abdichtung zwischen dem Grundkörper als abschnittsweise Ummantelung für den Leiter und der Leiteroberfläche über einen langen Abschnitt des Leiters gewährleistet. Zudem ist in einer Ausgestaltung der Messsonde der Leiter über seinen Umfang im Wesentlichen gleichmäßig vom Grundkörper aus zumindest einem Keramik-Werkstoff eingeschlossen.

Optional oder alternativ erstreckt sich vorzugsweise mindestens ein Leiter über wenigstens einen Abschnitt in einem Winkel relativ zur Mittelachse des Messkörpers. Einer der zumindest abschnittsweise parallel zur Mittelachse des Messkörpers verlaufenden Leiter weist in einer Ausführungsform der Erfindung einen Leiterabschnitt auf, der bevorzugt senkrecht zur Mittelachse, insbesondere radial zur Mittelachse des Grundkörpers des Messkörpers verläuft. In eine anderen Ausgestaltung der Erfindung erstreckt sich einer der vorzugsweise mehreren Leiter sich entlang einer Achse, die bevorzugt schräg zur Mittelachse des Messkörpers verläuft. Ein solcher Leiter weist somit einen zur Mittelachse des Messkörpers geneigten bzw. schrägen Verlauf innerhalb des Grundkörpers aus dem bevorzugt isolierenden Keramik-Werkstoff auf.

In einer bevorzugten Ausgestaltung der vorliegenden Erfindung ist einer der Leiter koaxial zur Mittelachse des Messkörpers angeordnet. Damit ist der Leiter in Längsrichtung über seinen gesamten Umfang gleichmäßig beabstandet zur äußeren, mit dem Fluid in Kontakt stehenden Oberfläche des Messkörpers angeordnet. Gemäß einer Ausführungsform der Erfindung weist der Messkörper bzw. dessen Grundkörper, durch den die äußere Kontur des Messkörpers bestimmt wird, in Erstreckungsrichtung beziehungsweise in Längsrichtung einen zylindrischen Querschnitt auf. Die Ausgestaltung eines Messkörpers mit zylindrischem Querschnitt stellt eine einfache Möglichkeit zur Herstellung eines zu sinternden Bauteiles dar.

Vorzugsweise sind innerhalb des Messkörpers beziehungsweise des aus dem Keramik-Werkstoff hergestellten Grundkörpers ein oder mehrere Leiter in Abständen zur Mittelachse des Messkörpers verlaufend angeordnet. Die vorzugsweise gleichmäßig oder in unterschiedlichen Winkeln zueinander um die Mittelachse des Messkörpers verlaufenden Leiter weisen bevorzugt in ihrer Längsrichtung einen gleichmäßigen beziehungsweise sich verändernden Abstand zur Mittelachse auf. Damit verläuft der eine oder verlaufen die mehreren Leiter parallel zur Mittelachse beziehungsweise unter einem Winkel geneigt zur Mittelachse des Messkörpers. Vorzugsweise verlaufen in einer Ausführung der Erfindung die Leiter zur konduktiven Füllstandsmessung in Abständen verteilt um die Mittelachse des Messkörpers herum.

Vorzugsweise endet mindestens ein Leiter an der mit dem Fluid in Kontakt stehenden Oberfläche des Messkörpers. Bevorzugt weist der Leiter zum Erfassen der Leitfähigkeit des Fluids sowie die Leiter zum Erfassen des Minimal- und/oder Maximal-Füllstands des Fluids in der Apparatur einen Leiterabschnitt auf, der unter einem Winkel von bevorzugt 90 Grad zur Längsachse des Messkörpers verläuft. Dabei ist gewährleistet, dass der Leiter mit seinem Ende an der Oberfläche, insbesondere der zylindrischen Umfangsfläche des Messkörpers, endet und eine Verbindung mit dem zu messenden Fluid hergestellt ist. Vorzugsweise ist das an der Oberfläche des Messkörpers endende Ende eines jeweiligen Leiters mit einem Messfühler zur Vergrößerung der Messfläche verbunden. Vorzugsweise ist der Leiter zum Erfassen eines Maximal-Füllstandes und/oder eines Minimal-Füllstandes sowie der Leiter zur Erfassung der Leitfähigkeit über einen als Metallring ausgebildeten Messfühler verbunden. Der Metallring erstreckt sich bevorzugt vollständig um die Umfangsfläche des insbesondere zylindrischen Messkörpers herum. Somit wird der Füllstand beziehungsweise die Leitfähigkeit des Fluids im Behälter vollumfänglich um den Messkörper herum erfasst. Eine mögliche Schieflage der Apparatur beziehungsweise eine Fehlstellung bzw. Fehlausrichtung der Messsonde innerhalb der Apparatur wird somit auf einfache Weise ausgeglichen.

Gemäß einer bevorzugten Weiterbildung der erfindungsgemäßen Messsonde ist der Messkörper stabförmig ausgebildet. Damit ist eine einfache Ausgestaltung des Messkörpers, insbesondere des den oder die Leiter aufnehmenden Grundkörpers aus bevorzugt einem Keramik-Werkstoff bewirkt. Zudem ermöglicht die stabförmige Ausgestaltung des Grundkörpers die einfache Anordnung beziehungsweise Ausbildung der Messfühler in vorbestimmten Abschnitten beziehungsweise Abständen zueinander entlang des erfindungsgemäßen Messkörpers. Durch die Verwendung des Keramik-Werkstoffes weist der Grundkörper und damit der Messkörper eine hohe Festigkeit auf. Vorzugsweise weist der Messkörper eine Stabform mit einem bevorzugt zylindrischen Durchmesser auf, wobei die Querschnittsfläche über die Gesamtlänge des Messkörpers im Wesentlichen identisch bleibt. Zudem ist mit der Stabform des Messkörpers eine bevorzugt langgestreckte Messstrecke erzeugt, entlang der eine kontinuierliche Füllstandsmessung des im Behälter befindlichen Fluids über einen großen Messbereich innerhalb der Apparatur ermöglicht ist.

Vorzugsweise ist der oder sind die Leiter an einem Endbereich des vorzugsweise stabförmigen Messkörpers jeweils elektrisch leitend mit einem Anschlussdraht zum Übertragen der Messgröße und/oder des Messsignals verbunden. An einem der Endbereiche des Messkörpers, insbesondere an einem stirnseitigen Endabschnitt auf der drucklosen Seite des Grundkörpers, weisen die Leiter jeweils eine Kontaktfläche für eine Verbindung mit einem Anschlussdraht für eine elektrisch leitende Verbindung zur elektronischen Steuereinheit auf. Die Kontaktflächen des Messkörpers sind bevorzugt von der Messumgebung in der Appartur an der Messsonde abgeschirmt aufgenommen. Die Kontaktflächen haben somit keinen direkten Kontakt mit dem Fluid im Behälter. Dadurch ist ein störungsfreies Übertragen der mittels des Messkörpers aufgenommenen Messgrößen beziehungsweise ein Leiten eines die Messgröße repräsentierenden Messsignals an zumindest eine Steuereinheit der Messsonde möglich.

Gemäß einer Weiterbildung der erfindungsgemäßen Messsonde ist ein Messkörper-Halter mit einer Aufnahme für den Messkörper vorgesehen, in der der Messkörper abschnittsweise, vorzugsweise einer der Endbereiche des Messkörpers, aufgenommen ist. Bevorzugt ist der Endbereich beziehungsweise der Endabschnitt des Messkörpers im Messkörper-Halter aufgenommen, an dessen Stirnfläche die Kontaktflächen angeordnet sind, mit denen jeweils ein Anschlussdraht verbunden ist beziehungsweise die für eine Verbindung mit einem Anschlussdraht vorgesehen sind. Bevorzugt ist der Endbereich des Messkörpers mit seinen stirnseitig ausgebildeten Kontaktflächen der im Messkörper aufgenommenen Leiter von der Messumgebung in der Apparatur, wie beispielsweise einem Behälter, fluiddicht abgeschirmt. Der Messkörper ist vorzugsweise mit etwa einem Zwanzigstel bis einem Fünftel seiner Gesamtlänge innerhalb der Aufnahme des Messkörper-Halters aufgenommen. Darüber ist eine feste Arretierung des Messkörpers am Messkörper-Halter gewährleistet.

Vorzugsweise weist der Messkörper-Halter einen Rohrkörper oder ein zylindrisches Drehteil auf, an dessen freien Ende die Aufnahme für den Messkörper angeordnet ist. Durch die Ausgestaltung des Messkörper-Halters als vorzugsweise langgestreckter Rohrkörper ist bewirkt, dass der Messkörper mittels des Messkörper-Halters an einer vorbestimmten Position innerhalb der Apparatur vorstehend positioniert werden kann. Bevorzugt ist der Messkörper für eine senkrechte Anordnung in einer bevorzugt als Aufnahmereservoir für ein Fluid ausgebildeten Apparatur bestimmt. Unter bestimmten Voraussetzungen, wenn der oder die Leiter des Messkörpers nicht für eine kontinuierliche Erfassung beziehungsweise ein Detektieren des Füllstandes im Behälter vorgesehen sind, wird in einer alternativen Ausgestaltung der Messkörper-Halter mit seinem am freien Ende des Messkörper-Halters aufgenommenen Messkörper in eine horizontale Ausrichtung innerhalb des Behälters gebracht. Der Rohrkörper ist vorzugsweise ein zylindrisches Drehteil mit der Form eines Hohlzylinders.

Die Aufnahme des Messkörper-Halters ist vorzugsweise als zylindrische Ausnehmung ausgebildet, in der der mit den Anschlussdrähten ausgerüstete Endbereich des Messkörpers hineinragt. Damit ist auf einfache Weise das Abschirmen der Stirnseite des Messkörpers von der Messumgebung bewirkt, welche die Kontaktflächen der Leiter im Messkörper aufweist. Die zylindrische Ausnehmung ist am freien, stirnseitigen Ende des Messkörper-Halters angeordnet. Die Ausnehmung weist vorzugsweise ein geringes Übermaß zum Außendurchmesser des vorzugsweise stabförmigen Messkörpers auf. Hinter der zylindrischen Ausnehmung ist der Rohrkörper erweitert ausgebildet, wobei der Innendurchmesser des Rohrkörpers etwa um ein Drittel bis die Hälfte größer ist als der Außendurchmesser des Messkörpers. Somit ist über einen Abschnitt der Anordnung aus Messkörper und Messkörper-Halter zwischen dem Außendurchmesser des Messkörpers und dem Innendurchmesser des Rohrkörpers ein ringförmiger Spalt vorgesehen.

Gemäß einer Weiterbildung der erfindungsgemäßen Messsonde ist eine Dichtung, insbesondere eine Stopfbuchsen-Dichtung, für eine Abdichtung zwischen dem Messkörper-Halter und Messkörper vorgesehen. Die Dichtung wird insbesondere in dem ringförmigen Spalt zwischen dem erweiterten Innendurchmesser des Messkörper-Halters und dem Außendurchmesser des Messkörpers hinter seiner zylindrischen Ausnehmung angeordnet. Darüber ist eine einfache und zugleich mediendichte Abdichtung auch bei hohen Drücken in der Messumgebung gewährleistet. Die Stopfbuchse weist bevorzugt eine Packung aus einem Dichtmaterial auf, die im ringförmigen Spalt zwischen der Außenwand des Messkörper und der Innenwand des Messkörper-Halters angeordnet ist. Durch das axiale Verpressen der Packung weitet sich diese in radialer Richtung auf und legt sich abdichtend an die Innenwand des Messkörper-Halters und die Außenwand des Messkörpers an.

Gemäß einer Weiterbildung der Erfindung ist vorzugsweise ein separat zum Messkörper ausgebildeter Temperatursensor zum Erfassen der Temperatur innerhalb der Apparatur vorgesehen, insbesondere einer Temperatur der flüssigen Phase des Fluids oder einer Gasphase, vorzugsweise Wasserdampf. Mithilfe des Temperatursensors wird in Abhängigkeit seiner Position in der Apparatur die Temperatur der flüssigen Phase und/oder der darüber liegenden Gasphase erfasst. Durch die Ermittlung der Temperatur kann in Verbindung mit der Ermittlung der Leitfähigkeit des Fluids in der Apparatur der Füllstand des Fluids innerhalb des Behälters sehr genau bestimmt werden. Die Messsonde umfasst bevorzugt einen als Widerstandsthermometer ausgebildeten Temperatur-Sensor, der in Abhängigkeit von der vorliegenden Temperatur innerhalb der Apparatur seinen Widerstand ändert, was sich einfach und genau ermitteln lässt.

Vorzugsweise ist der Temperatur-Sensor wenigstens abschnittsweise innerhalb des Messkörper-Halters aufgenommen. Der Messkörper-Halter weist vorzugsweise eine separat für den Temperatur-Sensor ausgebildete Aufnahme auf. Vorzugsweise ist der Temperatur-Sensor innerhalb einer Aufnahme aufgenommen, welche bevorzugt innerhalb der Rohrwandung des als Rohrkörper ausgebildeten Messkörper-Halters angeordnet ist. Vorzugsweise ist die Längsachse des Temperatur-Sensors parallel zur Längsachse des den oder die Leiter aufweisenden Messkörpers mit seinem Grundkörper aus einem Keramik-Werkstoff ausgerichtet.

Gemäß einer bevorzugten Ausgestaltung weist die erfindungsgemäße Messsonde eine zumindest den Messkörper aufnehmende Sondenbasis mit einem Befestigungsflansch zum Befestigen im Bereich einer Öffnung eines Wandabschnittes der Apparatur auf. Bevorzugt ragt der Messkörper in den Behälter, ein Teil der Sondenbasis ist außerhalb des Behälters angeordnet und die Öffnung ist durch die Sondenbasis verschlossen. Die Messsonde wird mit ihrer Sondenbasis an der Öffnung der Apparatur derart befestigt, dass der Messkörper vorzugsweise bestimmungsgemäß vertikal in den Behälter hineinragt. Der Messkörper ist vorzugsweise in das Fluid eingetaucht, wobei die Längsachse des Messkörpers im Wesentlichen senkrecht zur Oberfläche des Fluids ausgerichtet ist. Ein Teil der Sondenbasis, an dem vorzugsweise die elektronische Steuereinheit der Messsonde angeordnet ist, ist außerhalb des Behälters angeordnet. Zudem wird die etwa zylindrische Öffnung im Wandabschnitt der Apparartur durch die Sondenbasis abdichtend verschlossen. Zum Verschließen weist die Sondenbasis in einer Ausführungsform einen Befestigungsflansch auf, der fest an einem korrespondierenden Flanschteil der Wand der bevorzugt als Behälter ausgebildeten Apparatur befestigt wird. In einer anderen Ausführungsform der Erfindung umfasst die Sondenbasis einen Gewindeabschnitt, der in eine korrespondierende Aufnahme an der Apparatur eingeschraubt wird. Der Messkörper ist insbesondere über den Rohrkörper-Halter mit der Sondenbasis verbunden. Der Messkörper-Halter bildet insbesondere einen Teil der in den Behälter hineinragenden Sondenbasis aus. Vorzugsweise ist der Messkörper-Halter einstückig mit dem Befestigungsflansch ausgebildet, wodurch eine fluiddichte und druckfeste Verbindung zwischen Befestigungsflansch und Messkörper-Halter ausgebildet ist.

Ein weiterer Aspekt der Erfindung betrifft einen Behälter, insbesondere einen Dampfkessel, zum Aufnehmen eines flüssigen Mediums unter Druck, mit einer im Wesentlichen geschlossenen Behälterwand, und einer über eine Öffnung in der Behälterwand in das Behälterinnere hineinragenden Messsonde nach einem der vorstehend beschriebenen Ausführungsformen. Mit einer derartig erfindungsgemäßen ausgebildeten Messsonde ist es auf einfache Weise möglich, zumindest eine Messgröße selbst bei hohen Wirkdrücken über lange Zeiträume zuverlässig innerhalb des Behälters aufzunehmen. Vorzugsweise werden mittels der erfindungsgemäßen Messsonde mehrere Messgrößen, wie beispielsweise die elektrische Leitfähigkeit, der kontinuierliche Füllstand, kritische Grenz-Füllstände des Fluids sowie die Temperatur des Fluids, gleichzeitig erfasst. Der Behälter weist eine im Wesentlichen geschlossene Behälterwand auf, wobei vorliegend unter einer geschlossenen Behälterwand selbstverständlich zu verstehen ist, dass der Behälter mehrere Einlässe und mehrere Auslässe aufweist, welche jedoch mit entsprechenden Zu- und Ableitungen druckdicht und medienleitend verbunden sind. Bevorzugt ist in einer Ausgestaltung der Erfindung, dem Behälter eine Heizeinrichtung in Form eines Brenners zugeordnet, mittels dem das Fluid auf eine Temperatur von bis zu 300°C innerhalb des Behälters aufgeheizt wird. Bevorzugt steht das Fluid im Behälter zudem unter Druck von bis zu 200 bar.

Nachfolgend wird die Erfindung anhand eines Ausführungsbeispiels unter Bezugnahme auf die beigefügten Figuren näher beschrieben. Hierbei zeigen:
- Fig. 1: eine schematische Darstellung einer Apparatur mit einer erfindungsgemäßen Messsonde;
- Fig. 2: eine Teilansicht des Behälters und der darin angeordneten Messsonde;
- Fig. 3: eine Detailansicht der Messsonde mit einem ersten Ausführungsbeispiels eines erfindungsgemäßen Messkörpers im Längsschnitt;
- Fig. 4: eine Ansicht des erfindungsgemäßen Messkörpers nach Figur 3 im Querschnitt, und
- Fig. 5: eine Ansicht der Messonde mit einem zweiten Ausführungsbeispiel eines erfindungsgemäßen Messkörpers im Längsschnitt.

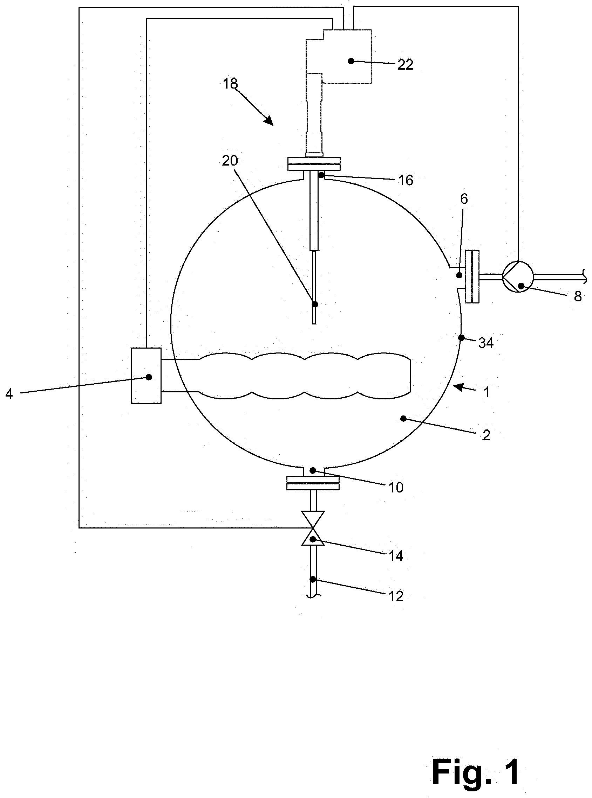

Figur 1 zeigt eine schematische Darstellung eines als Dampfkessel ausgebildeten Behälters 1, innerhalb dem ein Fluid 2 aufgenommen ist. Der Behälter 1 ist mit einer Heizeinrichtung 4 für das im Behälter 1 aufgenommene Fluid 2 ausgerüstet. Der Behälter 1 hat zumindest einen Zulauf 6, der medienleitend mit einer Speisewasserpumpe 8 für die Zufuhr des Fluids 2 in den Behälter verbunden ist. Im Bodenbereich des Behälters 1 ist ein Auslass 10 vorgesehen, der medienleitend mit einer Abgabeleitung 12 mit einem Ventil 14 zum Absalzen verbunden ist. An der Oberseite des Behälters 1 ist eine Öffnung 16 ausgebildet, über die eine Messsonde 18 abschnittsweise in das Innere des Behälters 1 hineinragt. Die Öffnung 16 wird durch Teile der Messsonde 18 abdichtend verschlossen. Die Messsonde 18 umfasst einen in das Fluid 2 vorstehenden Messkörper 20. Mittels des Messkörpers 20 werden Messgrößen des Fluids im Behälter 1 erfasst und in Form von die Messgrößen repräsentierenden Messsignalen an eine nicht näher gezeigte, elektronische Steuereinheit im Sondengehäuse 22 übermittelt. In Abhängigkeit von den mit der Messsonde 18 erfassten Messgrößen des Fluids innerhalb des Behälters 1 werden die verschiedenen Aggregate 4, 8, 14 des Dampfkessels angesteuert.

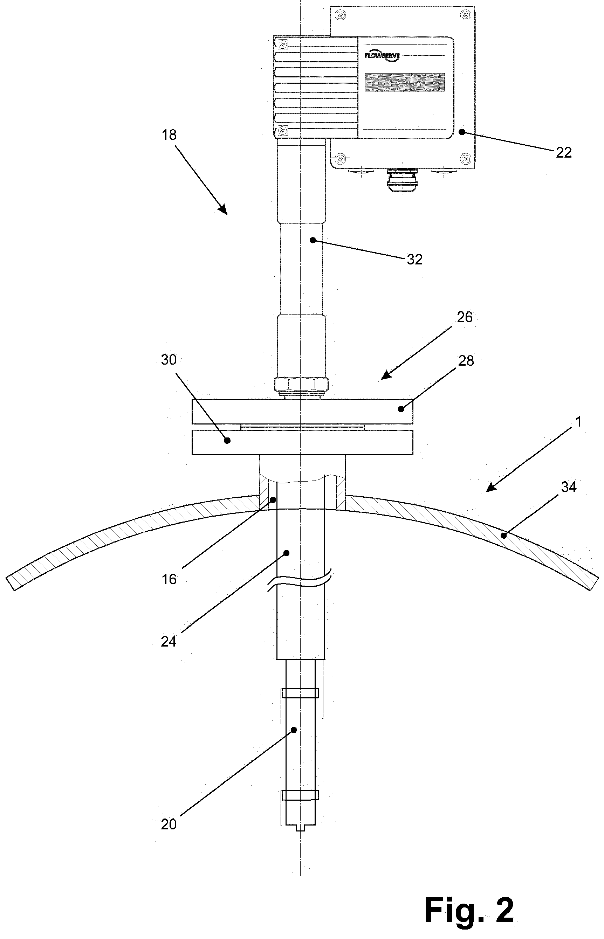

In Figur 2 ist eine vergrößerte Ansicht der Messsonde 18 gezeigt. Die Messsonde 18 weist neben ihrem Messkörper 20 einen Messkörper-Halter 24 auf, mittels dem der Messkörper 20 in eine bevorzugt senkrechte Ausrichtung gebracht und innerhalb des Behälters 1 gehalten wird. Der Messkörper-Halter 24 ist an einer Sondenbasis 26 angeordnet, welche einen Befestigungsflansch 28 hat. Mittels des Befestigungsflansches 28 wird die Messsonde 18 an einem im Bereich der Öffnung 16 im Behälter 1 zugeordneten Flanschteil 30 fluiddicht befestigt. An der Sondenbasis 26 ist ein Halsteil 32 angeordnet, an dessen oberen Ende das Sondengehäuse 22 mit der darin angeordneten elektronischen Steuereinheit befestigt ist. Über das Halsteil 32, welches zudem wärmeisolierend ausgebildet ist, weist das Sondengehäuse 22 mit der Steuereinheit einen ausreichenden Abstand zum Behälter 1 auf, innerhalb dem das darin befindliche Fluid Temperaturen von mehr als 200 Grad Celsius aufweisen kann. Der Behälter 1 weist eine zumindest zylindrische Behälterwandung 34 auf, an der die Öffnung 16 für die darin einsetzbare Messsonde 18 senkrecht verläuft.

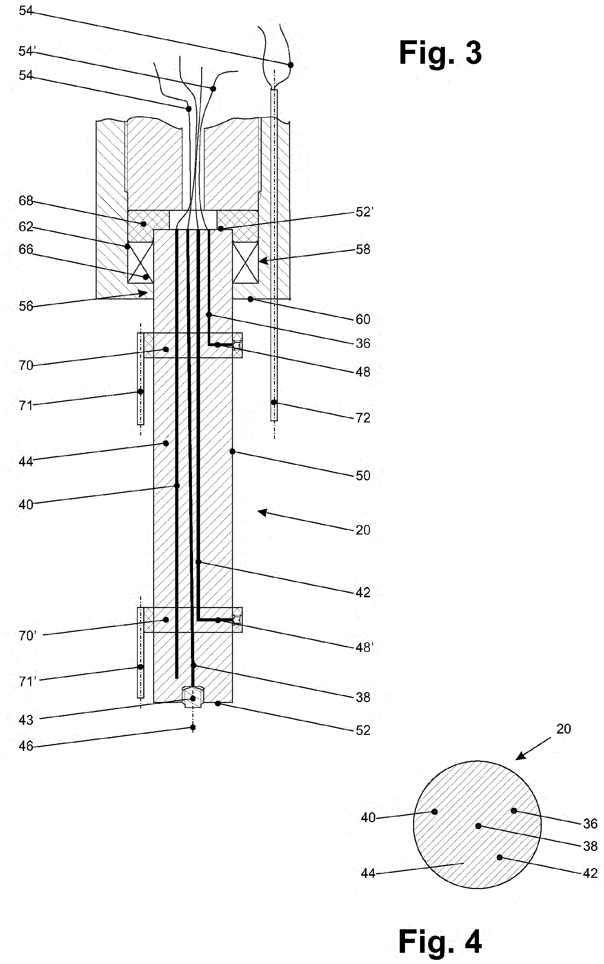

Figur 3 zeigt eine Schnittdarstellung einer ersten Ausführsform eines erfindungsgemäßen Messkörpers 20 im Längsschnitt. Der Messkörper 20 umfasst mehrere Leiter 36, 38, 40, 42, wobei die Leiter 36 bis 42 von einem die Leiter zumindest abschnittsweise umschließenden Grundkörper 44 aus einem Keramik-Werkstoff aufgenommen sind. Die Leiter 36 bis 42 sind innerhalb des Grundkörpers 44 gesintert. Die Leiter 36 bis 42 sind zum Beispiel aus Platin hergestellt. In einer anderen Ausgestaltung der Erfindung sind die Leiter 36 bis 42 aus einem Verbundwerkstoff gebildet oder enthalten einen Verbundwerkstoff, vorzugsweise auf Basis eines keramischen Werkstoffs eingebettet in einer metallischen Matrix. Durch entsprechende Zugabe von Zusatzstoffen, wie beispielsweise Aluminium, Zirkonium, Titan oder Bor kann die elektrische Leitfähigkeit des Verbundwerkstoffes individuell eingestellt werden. In einer anderen Ausgestaltung der Erfindung werden die eingesinterten Leiter 36 bis 42 aus einem Halbleiter-Werkstoff ausgebildet, wie zum Beispiel einem Verbund aus Siliziumkarbid und Kohlenstoff.

Der Leiter 36 dient zum Erfassen eines Maximal-Füllstandes des Fluids innerhalb des Behälters 1. Bei Erreichen des Maximal-Füllstandes erfolgt eine Änderung des Messsignales am Leiter 36, die durch die elektronische Steuereinheit im Sondengehäuse 22 (Figur 2) erfasst wird. Der Leiter 42 dient hingegen zum Erfassen eines Minimal-Füllstandes im Behälter, der bei Änderung des Messsignales ebenfalls von der elektronischen Steuereinheit erfasst wird. Der Leiter 40 wird zum kontinuierlichen Erfassen des Füllstandes des Fluids im Behälter 1 verwendet. Die kontinuierliche Füllstandsmessung erfolgt insbesondere zwischen den minimalen und maximalen Grenz-Füllständen im Behälter 1. Mit dem Leiter 38, der in einer Aufnahme 43 zur Befestigung des Messfühlers für die Leitfähigkeitsmessung mündet, wird die Leitfähigkeit des Fluids innerhalb des Behälters 1 erfasst. Die als Messsignal vorliegende Leitfähigkeit des Fluids wird ebenfalls an die elektronische Steuereinheit übermittelt, wobei, sofern die Leitfähigkeit über einen erlaubten Grenzwert ansteigt, eine Ansteuerung von zum Beispiel dem Ventil 14 zu Absalzen erfolgt. Gegebenenfalls wird mittels der Speisewasserpumpe 8 gleichzeitig Frischwasser über den Zulauf 6 (Figur 1) in den Behälter 1 eingeleitet.

Wie aus Figur 3 weiterhin ersichtlich, verlaufen die Leiter 36 bis 42 im Wesentlichen parallel zur Mittelachse 46 des Messkörpers 20. Die Leiter 36 und 42 weisen zudem einen senkrecht, bevorzugt radial zur Mittelachse 46 des Messkörpers verlaufenden Leitungsabschnitt 48, 48' auf. Die Leiter 36, 42 enden an der zylindrischen Umfangsfläche 50 des Grundkörpers 44 des Messkörpers 20, welcher mit dem Fluid innerhalb des Behälters 1 in Kontakt steht. Der Leiter 38 endet an der unteren Stirnseite 52 des Messkörpers 20 und ist mit einem Messfühler zum Detektieren des minimalen Grenzfüllstandes im Behälter 1 elektrisch leitend gekoppelt. Die Leiter 36 bis 42 weisen an der oberen Stirnseite 52' des Messkörpers 20 Kontaktflächen für eine elektrisch leitende Verbindung mit jeweils einem damit verbundenen Anschlussdraht 54, 54' auf. Der mit den Anschlussdrähten 54, 54' ausgerüstete Endbereich 56 des Messkörpers 20 ist in einer Aufnahme 58 des Messkörper-Halters 24 aufgenommen.

Die Aufnahme 58 ist als zylindrische Öffnung an der Stirnfläche 60 des ähnlich einem Rohrkörper ausgebildeten Messkörper-Halters 24 angeordnet. Der stabförmige Messkörper 20 ragt etwa mit einem Zwanzigstel bis einem Viertel seiner Gesamtlänge in die Aufnahme 58 am Messkörper-Halter 24 hinein. Die Anschlussdrähte 54, 54' sind somit innerhalb des Rohrkörpers angeordnet und stellen eine elektrisch leitende Verbindung zwischen den Leitern 36 bis 42 und der Steuereinheit im Sondengehäuse 22 her. Zwischen der Umfangsfläche 50 des Messkörpers 20 und der inneren Mantelfläche 62 des Messkörper-Halters 24 ist eine Stopfbuchsen-Dichtung 64 angeordnet. Die Stopfbuchsen-Dichtung 64 weist eine Packung 66 auf, welche mittels eines Scheibenkörpers 68 in axialer Richtung gestaucht wird. Durch das axiale Stauchen ist das Ausdehnen in radialer Richtung und somit eine Abdichtung zwischen äußerer Umfangsfläche 50 des Messkörpers 20 und innerer Mantelfläche 62 des Messkörper-Halters 24 bewirkt.

Die an der äußeren Umfangsfläche 50 des Messkörpers 20 endenden Leitungsabschnitte 48, 48' der Leiter 36, 42 sind jeweils mit einem sich um die gesamte Umfangsfläche 50 des stabförmigen Messkörpers 20 erstreckenden Metallring 70, 70' gekoppelt. Durch die Metallringe 70 ist das Erfassen beziehungsweise Detektieren der Messgrößen durch die Leiter 36, 42 über den gesamten Umfang des Messkörpers 20 möglich. An den Metallringen 70, 70' sind jeweils zusätzlich Messstäbe 71, 71' angeordnet. Die Messstäbe 71, 71' sind eingerichtet, um vorbestimmte minimale und maximale Grenz-Füllstände innerhalb der Apparatur zu detektieren. Die Messstäbe 71, 71' werden bei Inbetriebnahme der Messsonde auf ein entsprechend innerhalb der Apparatur abgestimmtes Längenmaß abgelängt. Zusätzlich zu dem Messkörper 20 ist am Messkörper-Halter 24 ein als Widerstandsthermometer ausgebildeter Temperatursensor 72 angeordnet. Mittels des Temperatursensors 72 wird die Temperatur der flüssigen Phase des Fluids und/oder dessen Gasphase oberhalb der flüssigen Phase aufgenommen.

In Figur 4 ist der Messkörper 20 im Querschnitt dargestellt. Die Leiter 36 bis 42 sind in dem Grundkörper 44 aus einem Keramik-Werkstoff gesintert, wodurch ein nahezu spaltfreier Kontakt zwischen der Oberfläche eines jeweiligen Leiters 36 bis 42 und dem zumindest abschnittsweise eine Ummantelung für die Leiter 36 bis 42 ausbildenden Grundkörper 44 bewirkt ist. Damit ist ein Leckage-Strom des Fluids entlang der Oberfläche der Leiter im Messkörper 20 auch bei Drücken bis zu 200 bar deutlich erschwert. Der Leiter 38 ist koaxial zur Mittelachse des Messkörpers angeordnet. Die Leiter 36, 40, 42 sind in Abständen und im Wesentlichen parallel zur Mittelachse des Messkörpers 20 verlaufend angeordnet.

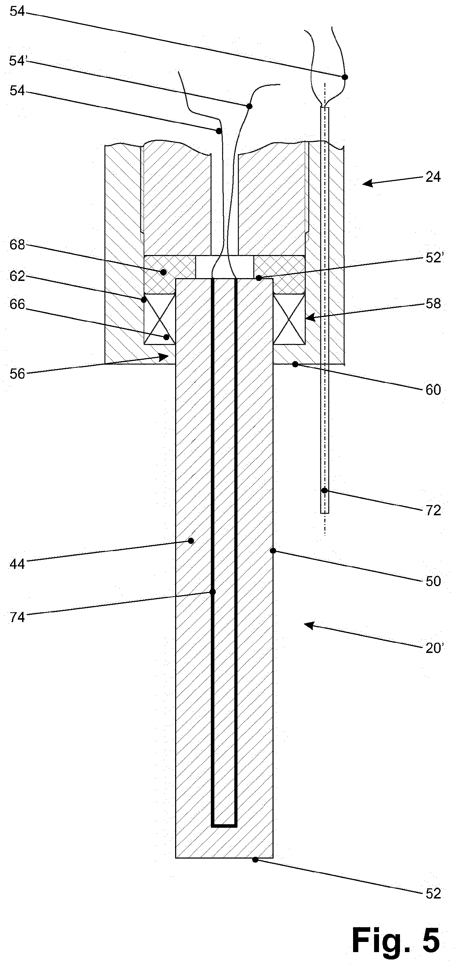

In Fig. 5 ist eine Schnittdarstellung eines zweiten Ausführungsbeispiels eines erfindungsgemäßen Messkörpers 20' im Längsschnitt gezeigt. Der Messkörper 20' weist in der vorliegenden Ausführungsform einen Leiter 74 auf, der innerhalb des Grundkörpers 44 im Wesentlichen U-förmig ausgebildet ist. Der Leiter 74 bildet innerhalb des Grundkörpers 44 des Messkörpers 20' eine Schlinge aus, wobei zwei Leitungsabschnitte des U-förmig verlaufenden Leiters 74 sich nahezu über die Gesamtlänge des Messkörpers 20' erstrecken. Die Enden des Leiters 74 enden jeweils beide an der Stirnseite 52' des Grundkörpers 44 und weisen somit auf der drucklosen Seite Kontaktflächen für Anschlussdrähte auf. Die Enden sind jeweils mit den Anschlussdrähten 54, 54' elektrisch verbunden, über die eine Verbindung zur elektronischen Steuereinheit im Sondengehäuse hergestellt wird. Mithilfe des als Schlinge im Grundkörper 44 verlaufenden beziehungsweise U-förmig ausgebildeten Leiters 74 ist eine Temperaturmessung in der Apparatur und gleichzeitig eine kontinuierliche Füllstands-Erfassung möglich. Der mit den Anschlussdrähten 54, 54' ausgerüstete Endbereich 56 des Messkörpers 20' ist wiederum in einer Aufnahme 58 des Messkörperhalters 24 abdichtend aufgenommen. Auch wenn nicht in Fig. 5 näher dargestellt, können zusätzlich zu dem U-förmig ausgebildeten Leiter 74 innerhalb des Messkörpers 20' der in Fig. 3 abgebildete Leiter 36 zum Erfassen eines Maximal-Füllstandes, der Leiter 42 zum Erfassen eines Minimalfüllstandes im Behälter sowie der Leiter 38 zum Ermitteln der Leitfähigkeit des Fluids im Behälter ausgebildet sein. Gleiche oder ähnliche Bauteile sind mit denselben Bezugszeichen versehen.

**Bezugszeichenliste**

| | | | |
|---|---|---|---|
| 1 | Behälter | 40, 42 | Leiter |
| 2 | Fluid | 44 | Grundkörper |
| 4 | Heizeinrichtung | 46 | Mittelachse |
| 6 | Zulauf | 48, 48' | Leitungsabschnitt |
| 8 | Speisewasserpumpe | 50 | Umfangsfläche |
| 10 | Auslass | 52, 52' | Stirnseite |
| 12 | Abgabeleitung | 54, 54' | Anschlussdraht |
| 14 | Ventil | 56 | Endbereich |
| 16 | Öffnung | 58 | Aufnahme |
| 18 | Messsonde | 60 | Stirnfläche |
| 20, 20' | Messkörper | 62 | innere Mantelfläche |
| 22 | Sondengehäuse | 64 | Stopfbuchsen-Dichtung |
| 24 | Messkörper-Halter | 66 | Packung |
| 26 | Sondenbasis | 68 | Scheibenkörper |
| 28 | Befestigungsflansch | 70, 70' | Metallring |
| 30 | Flanschteil | 71, 71' | Messstab |
| 32 | Halsteil | 72 | Temperatursensor |
| 34 | Behälterwandung | 74 | Leiter |
| 36, 38 | Leiter | | |

## Patentansprüche

1. Messsonde (18) zum Erfassen mindestens einer Messgröße eines Fluids in einer Apparatur, insbesondere einem Behälter, mit
mindestens einem Messkörper (20), wobei der Messkörper (20) einen oder mehrere Leiter (36, 38, 40, 42) zum Detektieren einer Messgröße und/oder Leiten eines die Messgröße repräsentierenden Messsignals aufweist,
wobei der Messkörper (20) einen den oder die Leiter (36, 38, 40, 42) zumindest abschnittsweise aufnehmenden Grundkörper (44) aus einem Keramik-Werkstoff aufweist, wobei der Grundkörper aus dem Keramik-Werkstoff die äußere Kontur des mit dem Fluid in Kontakt stehenden Messkörpers ausbildet, und der Leiter (36, 38, 40, 42) innerhalb des Grundkörpers (44) eingesintert ist, wobei der oder die Leiter einen wenigstens über nahezu die gesamte Länge des Grundkörpers eingesinterten Leiterabschnitt haben, wobei der oder die Leiter (36, 38, 40, 42) aus einem Verbundwerkstoff gebildet sind oder einen Verbundwerkstoff enthalten, auf Basis eines keramischen Werkstoffs, und
wobei mindestens ein Leiter (36) zum Erfassen eines Maximal-Füllstands des Fluids (2) und/oder ein Leiter (42) zum Erfassen eines Minimal-Füllstands des Fluids (2) und/oder ein Leiter (40) zum kontinuierlichen Erfassen des Füllstands des Fluids (2) in der Apparatur eingerichtet ist.

2. Messsonde nach Anspruch 1,
**dadurch gekennzeichnet, dass** wenigstens einer der Leiter (36, 38, 40, 42) im Messkörper (20) zum Erfassen der Leitfähigkeit des Fluids (2) innerhalb der Apparatur eingerichtet ist.

3. Messsonde nach mindestens einem der Ansprüche 1 und 2,
**dadurch gekennzeichnet, dass** wenigstens ein Leiter (74) als Temperatursensor, vorzugsweise als Widerstandsthermometer, zum Erfassen der Temperatur in der Apparatur und/oder zum kontinuierlichen Erfassen des Füllstandes in der Apparatur ausgebildet ist.

4. Messsonde nach mindestens einem der Ansprüche 1 bis 3,
**dadurch gekennzeichnet, dass** mindestens ein Leiter (74) im Wesentlichen U-förmig innerhalb des Grundkörpers (44) ausgebildet ist, wobei vorzugsweise die Leiterenden an einer Stirnseite (52') des Messkörpers (20') enden, und/oder **dadurch gekennzeichnet, dass** mindestens ein Leiter (36, 38, 40, 42) wenigstens abschnittsweise parallel zur Mittelachse (46) des Messkörpers (20) verläuft.

5. Messsonde nach mindestens einem der Ansprüche 1 bis 4,
**dadurch gekennzeichnet, dass** mindestens ein Leiter (36, 38, 40, 42) sich wenigstens abschnittsweise in einem Winkel relativ zur Mittelachse (46) des Messkörpers (20) erstreckt, und/oder **dadurch gekennzeichnet, dass** einer der Leiter (36, 38, 40, 42) koaxial zur Mittelachse (46) des Messkörpers (20) angeordnet ist, und/oder **dadurch gekennzeichnet, dass** ein oder mehrere Leiter (36, 38, 40, 42) in Abständen zur Mittelachse (46) verlaufend angeordnet sind.

6. Messsonde nach mindestens einem der Ansprüche 1 bis 5,
**dadurch gekennzeichnet, dass** mindestens ein Leiter (36, 38, 42) an der mit dem Fluid (2) in Kontakt stehenden Oberfläche des Messkörpers (20) endet, und/oder **dadurch gekennzeichnet, dass** der Messkörper (20) stabförmig ausgebildet ist.

7. Messsonde nach mindestens einem der Ansprüche 1 bis 6,
**dadurch gekennzeichnet, dass** der oder die Leiter (36, 38, 40, 42) an einem Endbereich (56) des vorzugsweise stabförmigen Messkörpers (20) jeweils elektrisch leitend mit einem Anschlussdraht (54, 54') zum Übertragen der Messgröße und/oder des Messsignals verbunden ist/sind.

8. Messsonde nach mindestens einem der Ansprüche 1 bis 7,
**gekennzeichnet durch** einen Messkörper-Halter (24) mit einer Aufnahme (58) für den Messkörper (20), in der der Messkörper (20) abschnittsweise, vorzugsweise einer der Endbereiche (56) des Messkörpers (20), aufgenommen ist, und/oder **dadurch gekennzeichnet, dass** der Messkörper-Halter (24) einen Rohrkörper aufweist, an dessen freien Ende die Aufnahme (58) für den Messkörper (20) angeordnet ist, und/oder **dadurch gekennzeichnet, dass** die Aufnahme (58) eine vorzugsweise zylindrische Ausnehmung ist, in die der mit den Anschlussdrähten ausgerüstete Endbereich (56) des Messkörpers (20) hineinragt.

9. Messsonde nach mindestens Anspruch 8,
**gekennzeichnet durch** eine Dichtung (64), insbesondere Stopfbuchsen-Dichtung für eine Abdichtung zwischen Halter (24) und Messkörper (20).

10. Messsonde nach mindestens einem der Ansprüche 1 bis 9,
**gekennzeichnet durch** einen separat zum Messkörper (20) ausgebildeten Temperatur-Sensor (72) zum Erfassen der Temperatur innerhalb der Apparatur, insbesondere einer Temperatur der flüssigen Phase des Fluids (2) oder einer Gasphase, vorzugsweise Wasserdampf.

11. Messsonde nach Anspruch 10,
**dadurch gekennzeichnet, dass** der Temperatur-Sensor (72) wenigstens abschnittsweise innerhalb des Messkörper-Halters (24) aufgenommen ist.

12. Messsonde nach mindestens einem der Ansprüche 1 bis 11,
aufweisend eine Sondenbasis (26) mit einem Befestigungsflansch (28) zum Befestigen im Bereich einer Öffnung (16) eines Wandabschnittes der Apparatur, wobei der Messkörper-Halter (24) mit dem Messkörper (20) in die Apparatur ragt, ein Teil der Sondenbasis (26) außerhalb der Apparatur angeordnet ist und die Öffnung (16) durch die Sondenbasis (26) verschlossen ist.

13. Behälter (1), insbesondere Dampfkessel, zum Aufnehmen eines flüssigen Mediums unter Druck, mit
- einer im Wesentlichen geschlossenen Behälterwand, und
- einer über eine Öffnung (16) in der Behälterwand in das Behälterinnere hineinragenden Messsonde (18) nach einem der Ansprüche 1 bis 12.

## Claims

1. Measurement probe (18) for detecting at least one measured value of a fluid in an apparatus, in particular a container with at least one measuring body (20), wherein the measuring body (20) comprises one or more conductors (36, 38, 40, 42) for detecting a measured value and/or for conducting a measurement signal representing the measured value,
wherein the measuring body (20) comprises a main body (44) made from a ceramic material which at least partly holds the conductor or conductors (36, 38, 40, 42), wherein the main body made from the ceramic material forms the outer contour of the measurement body in contact with the fluid and the conductor (36, 38, 40, 42) is sintered inside the main body (44),
wherein the conductor or the conductors have a conductor section which is sintered at least over almost the whole length of the main body, wherein the conductor or conductors (36, 38, 40, 42) are made from a composite material or contain a composite material on the basis of a ceramic material, and wherein at least one conductor (36) is setup for detecting a maximum filling level of the fluid (2) and/or a conductor (42) for detecting a minimum filling level of the fluid (2) and/or a conductor (4) for continually detecting the filling level of the fluid (2) in the apparatus.

2. Measurement probe according to claim 1,
**characterised in that** at least one of the conductors (36, 38, 40, 42) in the measuring body (20) is set up to detect the conductivity of the fluid (2) inside the apparatus.

3. Measurement probe according to at least one of claims 1 and 2,
**characterised in that** at least one conductor (74) is designed as a temperature sensor, preferably as a resistance thermometer, for detecting the temperature in the apparatus and/or for continually detecting the filling level in the apparatus.

4. Measurement probe according to at least one of claims 1 to 3,
**characterised in that** at least one conductor (74) is designed to be essentially U-shaped inside the main body (44), wherein preferably the conductor ends end on an end side (52') of the measuring body (20'), and/or **characterised in that** at least one conductor (36, 38, 40, 42) runs at least partly parallel to the central axis (46) of the measuring body (20).

5. Measurement probe according to at least one of claims 1 to 4,
**characterised in that** at least one conductor (36, 38, 40, 42) extends at least partly at an angle to the central axis (46) of the measuring body (20) and/or **characterised in that** one of the conductors (36, 38, 40, 42) is arranged to be coaxial to the central axis (46) of the measuring body (20) and/or **characterised in that** one or more conductors (36, 38, 40, 42) are arranged at distances from the central axis (46).

6. Measurement probe according to at least one of claims 1 to 5,
**characterised in that** at least one conductor (36, 38, 42) ends on the surface of the measuring body (20) in contact with the fluid (2), and/or **characterised in that** the measuring body (20) is designed to be rod-like.

7. Measurement probe according to at least one of claims 1 to 6,
**characterised in that** the conductor or conductors (36, 38, 40, 42) at an end section (56) of the preferably rod-like measuring body (20) is/are connected electroconductively respectively to a connecting wire (54, 54') for transmitting the measured value and/or the measurement signal.

8. Measurement probe according to at least one of claims 1 to 7,
**characterised by** a measuring body holder (24) with a mount (58) for the measuring body (20), in which the measuring body (20) is mounted partly, preferably one of the end sections (56) of the measuring body (20), and/or
**characterised in that** the measuring body holder (24) has a pipe body, at the free end of which the mount (58) for the measuring body (20) is arranged and/or
**characterised in that** the mount (58) is a preferably cylindrical recess, into which the end section (56) of the measuring body (20) equipped with the connecting wires projects.

9. Measurement probe according to at least claim 8,
**characterised by** a seal (64), in particular a gland seal for sealing between the holder (24) and measuring body (20).

10. Measurement probe according to at least one of claims 1 to 9,
**characterised by** a temperature sensor (72) designed to be separate from the measuring body (20) for detecting the temperature inside the apparatus, in particular a temperature of the liquid phase of the fluid (2) or a gas phase, preferably steam.

11. Measurement probe according to claim 10,
**characterised in that** the temperature sensor (72) is mounted at least partly inside the measuring body holder (24).

12. Measurement probe according to at least one of claims 1 to 11,
having a probe base (26) with a securing flange (28) for securing in the area of an opening (16) of a wall section of the apparatus, wherein the measuring body holder (24) projects with the measuring body (20) into the apparatus, a portion of the probe base (26) is arranged outside the apparatus and the opening (16) is closed by the probe base (26).

13. Container (1), in particular a boiler, for holding a pressurised fluid medium with
- a container wall which is essentially closed and
- a measurement probe (18) projecting through an opening (16) in the container wall into the inside of the container according to any of claims 1 to 12.

## Revendications

1. Sonde de mesure (18) pour la détection d'au moins une grandeur de mesure d'un fluide dans un appareillage, en particulier un récipient, avec
au moins un corps de mesure (20), dans laquelle le corps de mesure (20) présente un ou plusieurs conducteurs (36, 38, 40, 42) pour la détection d'une grandeur de mesure et/ou l'acheminement d'un signal de mesure représentant la grandeur de mesure,
dans laquelle le corps de mesure (20) présente un corps de base (44) en matériau céramique recevant au moins par section le ou les conducteurs (36, 38, 40, 42),
dans laquelle le corps de base en matériau céramique forme le contour extérieur du corps de mesure qui est en contact avec le fluide, et le conducteur (36, 38, 40, 42) est sintérisé à l'intérieur du corps de base (44),
dans laquelle le ou les conducteurs ont une section de conducteur sintérisée au moins sur pratiquement toute la longueur du corps de base, dans laquelle le ou les conducteurs (36, 38, 40, 42) sont formés en un matériau composite ou contiennent un matériau composite, à base d'un matériau céramique, et
dans laquelle au moins un conducteur (36) est aménagé pour la détection d'un niveau de remplissage maximum du fluide (2) et/ou un conducteur (42) est aménagé pour la détection d'un niveau de remplissage minimum du fluide (2) et/ou un conducteur (40) est aménagé pour la détection continue du niveau de remplissage du fluide (2) dans l'appareillage.

2. Sonde de mesure selon la revendication 1,
**caractérisée en ce qu'**au moins un des conducteurs (36, 38, 40, 42) est aménagé dans le corps de mesure (20) pour la détection de la conductibilité du fluide (2) à l'intérieur de l'appareillage.

3. Sonde de mesure selon au moins l'une quelconque des revendications 1 et 2,
**caractérisée en ce qu'**au moins un conducteur (74) est réalisé en tant que capteur de température, de préférence en tant que thermomètre à résistance, pour la détection de la température dans l'appareillage et/ou pour la détection continue du niveau de remplissage dans l'appareillage.

4. Sonde de mesure selon au moins l'une quelconque des revendications 1 à 3,
**caractérisée en ce qu'**au moins un conducteur (74) est réalisé sensiblement en forme de U à l'intérieur du corps de base (44), dans laquelle de préférence les extrémités de conducteur se terminent au niveau d'un côté frontal (52') du corps de mesure (20'), et/ou **caractérisée en ce qu'**au moins un conducteur (36, 38, 40, 42) s'étend au moins par section parallèlement à l'axe médian (46) du corps de mesure (20).

5. Sonde de mesure selon au moins l'une quelconque des revendications 1 à 4,
**caractérisée en ce qu'**au moins un conducteur (36, 38, 40, 42) s'étend au moins par section selon un angle par rapport à l'axe médian (46) du corps de mesure (20), et/ou **caractérisée en ce qu'**un des conducteurs (36, 38, 40, 42) est agencé coaxialement à l'axe médian (46) du corps de mesure (20), et/ou
**caractérisée en ce qu'**un ou plusieurs conducteurs (36, 38, 40, 42) sont agencés pour s'étendre à distance par rapport à l'axe médian (46).

6. Sonde de mesure selon au moins l'une quelconque des revendications 1 à 5,
**caractérisée en ce qu'**au moins un conducteur (36, 38, 42) se termine au niveau de la surface du corps de mesure (20) en contact avec le fluide (2) et/ou
**caractérisée en ce que** le corps de mesure (20) est réalisé en forme de tige.

7. Sonde de mesure selon au moins l'une quelconque des revendications 1 à 6,
**caractérisée en ce que** le ou les conducteurs (36, 38, 40, 42) est/sont relié(s) au niveau d'une zone d'extrémité (56) du corps de mesure (20) de préférence en forme de tige respectivement de manière électriquement conductrice à un câble de raccordement (54, 54') pour la transmission de la grandeur de mesure et/ou du signal de mesure.

8. Sonde de mesure selon au moins l'une quelconque des revendications 1 à 7,
**caractérisée par** un support de corps de mesure (24) avec un logement (58) pour le corps de mesure (20), dans lequel le corps de mesure (20) est reçu par section, de préférence une des zones d'extrémité (56) du corps de mesure (20), et/ou
**caractérisée en ce que** le support de corps de mesure (24) présente un corps tubulaire, à l'extrémité libre duquel le logement (58) pour le corps de mesure (20) est agencé, et/ou
**caractérisée en ce que** le logement (58) est un évidement de préférence cylindrique, dans lequel la zone d'extrémité (56) du corps de mesure (20) dotée de câbles de raccordement fait saillie.

9. Sonde de mesure selon au moins la revendication 8,
**caractérisée par** un joint d'étanchéité (64), en particulier un joint de presse-étoupe pour une étanchéification entre le support (24) et le corps de mesure (20).

10. Sonde de mesure selon au moins l'une quelconque des revendications 1 à 9,
**caractérisée par** un capteur de température (72) réalisé séparé du corps de mesure (20) pour la détection de la température à l'intérieur de l'appareillage, en particulier d'une température de la phase liquide du fluide (2) ou d'une phase gazeuse, de préférence vapeur d'eau.

11. Sonde de mesure selon la revendication 10,
**caractérisée en ce que** le capteur de température (72) est reçu au moins par section à l'intérieur du support de corps de mesure (24).

12. Sonde de mesure selon au moins l'une quelconque des revendications 1 à 11,
présentant une base de sonde (26) avec une bride de fixation (28) pour la fixation dans la zone d'une ouverture (16) d'une section de paroi de l'appareillage, dans laquelle le support de corps de mesure (24) avec le corps de mesure (20) fait saillie dans l'appareillage, une partie de la base de sonde (26) est agencée à l'extérieur de l'appareillage et l'ouverture (16) est fermée par la base de sonde (26).

13. Récipient (1), en particulier chaudière, pour la réception d'un agent fluide sous pression, avec
- une paroi de récipient sensiblement fermée, et
- une sonde de mesure (18) faisant saillie à l'intérieur du récipient par le biais d'une ouverture (16) dans la paroi de récipient selon l'une quelconque des revendications 1 à 12.
